Europäisches Patentamt

European Patent Office

Office européen des brevets

(11) Publication number: **0 207 386**
**A1**

## (12) EUROPEAN PATENT APPLICATION

(21) Application number: 86108382.2

(22) Date of filing: 19.06.86

(51) Int. Cl.⁴: **H 02 K 3/18**
**H 01 F 5/02**

(30) Priority: 01.07.85 GB 8516652

(43) Date of publication of application:
07.01.87 Bulletin 87/2

(84) Designated Contracting States:
DE FR IT SE

(71) Applicant: EASTHORPE INVESTMENTS Ltd.
Mercantile House Ridgeway Street
Douglas Isle of Man(GB)

(72) Inventor: Palliser, Alfred Milbanke Hudson
Dixcart Cottage
Sark Channel Islands(GB)

(74) Representative: Modiano, Guido et al,
MODIANO, JOSIF, PISANTY & STAUB Modiano &
Associati Via Meravigli, 16
I-20123 Milan(IT)

(54) Supporting spool for electrical windings.

(57) The spool (1) comprises essentially two juxtaposed half-spools (3,4) formed simultaneously in the spool manufacturing process. The half-spools (3,4) are associated with each other through a rupturable connection element (22) and a hinge element (21) for the purpose of aligning the half-spools (3,4), thereby enabling fast and easy winding of an electric conductor (23) around them. This step is facilitated by the provision of temporary hooking and gripping elements (19,20) on the half-spools (3,4), each of them being also provided, at the non-hinged end thereof, with suitable seats (15-17) for electric connectors (23).

Fig.2

"SUPPORTING SPOOL FOR ELECTRICAL WINDINGS"

This invention relates to a supporting spool for electrical windings.

In induction motors, there is generally provided a magnetic core with which an electrical winding is associated which is passed through by a current at a given value.

With small-size motors, where U-shaped magnetic cores are used, separate spools are located at each of their wings, such spools carrying a previously wound electric conductor.

Such spools, being initially separate, are later electrically interconnected.

A drawback to be encountered with such known spool types is the complexity of their manufacture and assembly, they being manufactured and assembled separately, and each having one element for mutual electric connection.

It is an aim of this invention to eliminate the foregoing drawbacks by providing a spool which allows the achievement of great simplicity of construction and assembly.

Within the above general aim, it is an object of the invention to provide a spool which requires no means of electric connection to other spools defining the winding.

It is another object of the invention to provide a spool which is of low cost, and obtainable by utilizing ordinary equipment.

According to one aspect of the invention, this aim and these and other objects which will be apparent hereinafter, are achieved by a supporting spool for electrical windings, characterized in that it comprises two half-spools associated together through a temporary connection element and a hinge element, said half-spools having temporary hooking and gripping elements, respectively, and suitable seats for electric connectors and for the end of a wire lead.

Further features and advantages of the invention will become apparent from the description of a preferred embodiment illustrated by way of example in the accompanying drawing sheets, where:

Figure 1 is a fragmentary perspective view of two half-spools according to the invention during the step of winding an electric conductor therearound;

Figure 2 is a schematic top plan view of the two half-spools associated with each other;

Figure 3 is a partially sectional end view of the head of a spool according to the invention, taken in the section plane III-III of Figure 2;

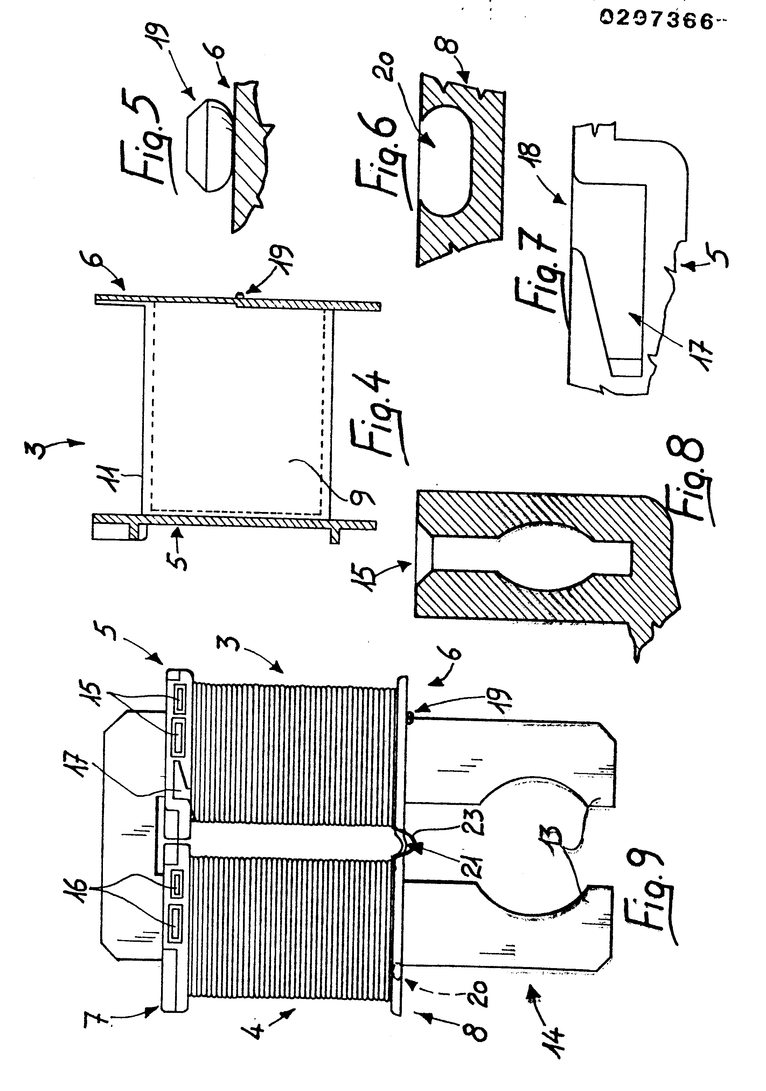

Figure 4 is a sectional side view of a spool taken in the section plane IV-IV of Figure 3;

Figures 5 and 6 are partially sectional detail views of the temporary connection element and respectively, the hinge element of the spool according to the invention;

Figure 7 is a fragmentary detail top plan view of a head of a spool showing a seat for accommodating one end of an electric conductor;

Figure 8 is a detail sectional end view taken in the section plane VIII-VIII of Figure 3; and

Figure 9 is a top plan view illustrating the coupling of two half-spools to a magnetic core.

With reference to the foregoing figures, the spool 1 for supporting electric windings 2 comprises essentially two half-spools 3 and 4.

Each of those half-spools is in turn composed of two substantially alike heads, indicated respectively by the numerals 5, 6 and 7, 8.

Those heads are laid in confronting pairs and have an essentially parallelepipedal shape, being moreover united in pairs along a perpendicular axis by core elements or joining elements, indicated respectively by the numerals 9 and 10.

The elements 9 and 10 have in turn a parallelepipedal shape, are hollow inside, and have a longitudinal mid-axis extending substantially through the centre point of each heads united therewith.

At each of the heads, there is formed to coincide with the peripheral edge 11 of the elements 9 and 10 an opening 12, adapted to allow the insertion of the wings 13 of a magnetic core 14 of U-like shape therein.

At the heads 5 and 7 there are present respectively seats 15 and 16 shaped to match the ends of electric connectors insertable therein.

In the proximity of the seats 15, the head 5 has a further seat 17 having an essentially trapezoidal cross-section and having an opening 18 formed close to the peripheral edge 11 of the element 9.

Projecting from the head 6, at the side thereof opposed to the core element 10, is a hooking element 19 composed of a tooth formed from the same material of the spool 1, said tooth being adapted for temporary engagement in cooperation with a gripping element 20 of matching shape in the form of a seat formed at the head 8 of the half-spool 4.

Both the hooking element 19 and gripping element 20 extend at the transverse mid-plane of the respective heads 6, 8 of the half-spools 3,4 and are equidistant from the longitudinal mid-axis of the same.

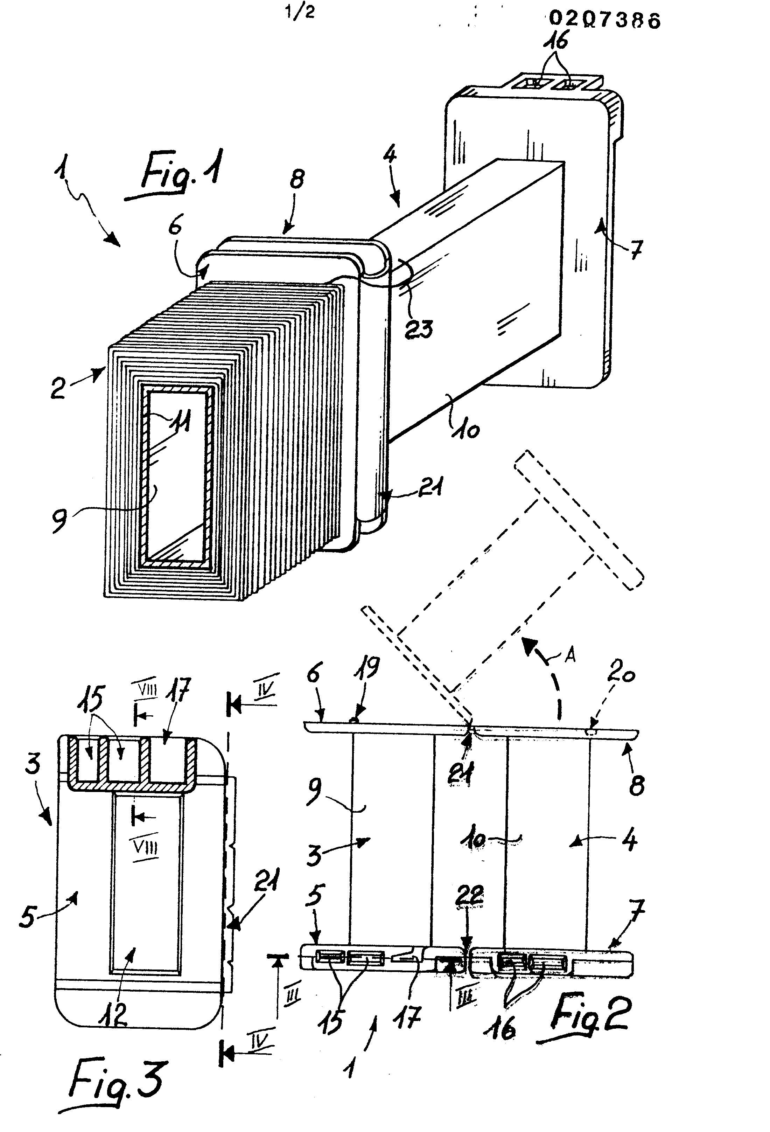

During the manufacturing stage, the two half-spools are obtained as shown in Figure 2, that is the one beside the other, the same being associated together through a hinge element 21 and a temporary connection element 22.

The hinge element 21 is composed of an elastically deformable strap joining one of the longitudinal peripheral edges of the mutually associated heads 6 and 8, the connection element 22 being composed of a thin, rupturable break-off connection placed between the confronting longitudinal peripheral edges of the heads 5 and 7.

Once the half-spools are obtained the rupturable connection forming the element 22 may be broken, and subsequently, the heads 6,8 of the half-spools 3,4 can be mutually rotated about the hinge element 21 as indicated by the arrow "A" in Figure 2, until the tooth 19 engages in the gripping element or seat 20, thus mutually aligning the longitudinal axes of the two half-spools 3,4, and imparting to the spool 1 the configuration as shown in Figure 1.

The mutual 180-degree rotation of the two half-spools is allowed by the provision of the flexible hinge element 22, the configuration of the two half-spools 3,4 shown in Figure 1 being maintainable by virtue of the presence of the mutually engageable hooking element 19 and gripping element 20, present on the heads 6 and 8 respectively.

The next stage consists of temporarily placing and engaging the end of an electric conductor 23 in the seat 17 in a wedge-like manner, which is effective to prevent the wire from unwinding during the following stage of winding the same around the element 9, by passing the conductor 23 around the hinge element 21 (Figures 1,9).

Once the desired number of turns is obtained, winding can continue on the adjoining element 10.

On completion of that operation, the ends of the conductor 23 will be placed at the seats 15 and 16 wherein the ends of a preset electric connector will be placed.

It will then be sufficient to uncouple the element 19 from the seat 20 for re-positioning the half-spools 3 and 4 side-by-side so as to allow insertion of the wings 13 of a magnetic core 14 into the core elements 9 and 10, to obtain the configuration shown in Figure 9.

It has thus been shown how the invention achieves its objects, it having achieved considerable simplicity of construction and assembly.

The two half-spools are in fact obtained in a single stage of making, the presence of the hinge element allowing for a subsequent fast and easy winding of the electric conductor, that stage being facilitated by the presence of the elements 19 and 20.

The hinge element 21 further affords electric continuity between the two windings of the two half-spools, avoiding the making of particular devices for electric connection therebetween.

Of course, the materials used and the dimensions may be any ones, depending on requirements.

## CLAIMS

1. An electric winding spool, characterised in that it comprises two half-spools (3,4) associated with each other through a temporary connection element (22) and a hinge element (21), said half-spools (3,4) have respectively temporary hooking (19) and gripping (20) elements as well as suitable seats (15,16,17) for electric connectors and for the end of a wire lead (23).

2. A spool according to Claim 1, comprising two half-spools which are characterised in that they are each composed of a pair of heads (5,6,7,8) joined through a hollow connection element (9,10), said half-spools (3,4) having substantially alike dimensions and shapes and being associated with each other, at two heads (6,8) placed adjacent each other, through a hinge element (21) in the form of an elastically deformable strap rigid with the longitudinal peripheral edges of said heads (6,8).

3. A spool according to Claims 1 and 2, comprising two half-spools (3,4) having a temporary connection element (22) which is characterised in that it is associated proximately to the longitudinal peripheral edges of the heads (5,7), opposed to the edges having the hinge element (21) rigid therewith, said edges being arranged to face one another upon the half-spools (3,4) being laid side-by-side.

4. A spool according to Claims 1, 2 and 3 comprising two half-spools (3,4) wherein the heads wherewith the hinge element (21) is rigid are characterised in that they have, on the opposed side to the connection element

0207386

(22) therebetween, hooking (19) and gripping (20) elements, each lying substantially at the transverse mid-axis of one half-spool (3,4) and equidistant from the longitudinal mid-axis of the same, said hooking element (19) being composed of a tooth (19) projecting perpendicularly from the head (6).

5. A spool according to Claims 1 and 4 comprising a gripping element (20) which is characterised in that it comprises a seat shaped to match the tooth (19).

6. A spool according to Claim 1 which is characterised in that in one of the heads (5,7) opposed to those (6,8) with which the hinge element (21) is rigid, there is present a temporary seat (17) for the end of an electric conductor (23), said seat (17) having an opening at the connection element between the heads (5,6).

7. A spool according to Claim 1, which is characterised in that the heads (5,7) of the half-spools (3,4), opposed to those (6,8) wherewith the hinge element (21) is rigid, have one or more seats (15,16,17) for the ends of electric connectors.

**Fig.1**

**Fig.3**

**Fig.2**

Fig.4

Fig.5

Fig.6

Fig.7

Fig.8

Fig.9

2/2

0297366

European Patent
Office

**EUROPEAN SEARCH REPORT**

0207386
Application number

EP  86 10 8382

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | DE-B-2 360 402 (SIEMENS AG) * column 2, line 66 - column 4, line 27; figures 1, 2 * | 1,3-7 | H 02 K 3/18 H 01 F 5/02 |
| X | DE-B-2 138 987 (SWF-SPEZIALFABRIK FÜR AUTOZUBEHÖR GUSTAV RAU GMBH) * column 2, lines 29-66; figures 1, 2 * | 2 | |
| A | DE-B-2 360 411 (SIEMENS AG) * column 2, line 40 - column 4, line 12; figure * | 1-7 | |
| A | PATENT ABSTRACTS OF JAPAN, vol. 3, no. 34 (E-99), 22nd March 1979, page 153 E99; & JP - A - 54 13288 (MATSUSHITA DENKO) 31-01-1979 * abstract, figure * | 1,3-5 | TECHNICAL FIELDS SEARCHED (Int. Cl.4) H 02 K 3/00 H 01 F 5/00 |

The present search report has been drawn up for all claims

| Place of search | Date of completion of the search | Examiner |
|---|---|---|
| BERLIN | 18-09-1986 | WEIHS J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82